# EUROPÄISCHE PATENTSCHRIFT

(11) **EP 2 822 812 B1**
(45) Veröffentlichungstag und Bekanntmachung des Hinweises auf die Patenterteilung: **16.03.2016**
(21) Anmeldenummer: 12810100.3
(22) Anmeldetag: 19.12.2012
(51) Int. Cl.: B60R 1/00

(54) **KRAFTFAHRZEUG MIT EINEM ELEKTRONISCHEN RÜCKSPIEGEL**
MOTOR VEHICLE WITH AN ELECTRONIC MIRROR
VÉHICULE AUTOMOBILE AVEC UN MIROIR ÉLECTRONIQUE

(30) Priorität: 07.03.2012 DE 102012004793
(43) Veröffentlichungstag der Anmeldung: 14.01.2015
(73) Patentinhaber: Audi AG, 85045 Ingolstadt (DE)
(72) Erfinder: HEINEMANN, Patrick, 85092 Kösching (DE); REICH, Andreas, 85114 Buxheim (DE)
(74) Vertreter: Schuster, Simon
(86) Internationale Anmeldenummer: PCT/EP2012/005246
(87) Internationale Veröffentlichungsnummer: WO 2013/131543

(56) Entgegenhaltungen:
- EP-A1- 1 930 203
- DE-A1-102009 008 041
- US-A- 5 680 123
- US-A1- 2002 186 201

## Beschreibung

Die Erfindung betrifft ein Kraftfahrzeug, umfassend wenigstens einen elektronischen Rückspiegel, insbesondere einen Außen- und/oder Seitenspiegel, der eine Anzeigevorrichtung, insbesondere ein Display, für von einer insbesondere außerhalb des Kraftfahrzeugs vorgesehenen Außenkamera aufgenommene Bilder aufweist.

Im Stand der Technik wurden elektronische Rückspiegel, insbesondere elektronische Außenspiegel und/oder Seitenspiegel, bereits vorgeschlagen. Bei dieser Art von Außenspiegeln ist ein virtueller Spiegel vorgesehen, das bedeutet, statt einer Spiegelfläche wird eine Anzeigevorrichtung, insbesondere ein Display, verwendet, die Daten, die von einer insbesondere im Außenspiegel selbst angeordneten Außenkamera aufgenommen werden, darstellt. Allerdings sind auch Ausgestaltungen bekannt, bei denen die Anzeigevorrichtung im Innenraum des Kraftfahrzeugs, beispielsweise im Bereich der A-Säule, angeordnet ist. Dabei sind allgemeine Systeme bekannt, bei denen für das auf der Anzeigevorrichtung dargestellte Bild ein fest definierter (Kamera-) Blickwinkel vorgesehen ist.

Jedoch wurden inzwischen auch Systeme vorgeschlagen, die beispielsweise eine Verstellung der Kamera erlauben. Dabei wird eine Schwenkeinrichtung verwendet, die es ermöglicht, eine Neigungs- beziehungsweise Winkelnachführung des Kamerasystems zu erlauben, um eine Spiegeinachstellung zu ersetzen.

In der nachveröffentlichten Patentanmeldung DE 10 2011 118 253.9 der Anmelderin wurde zudem vorgeschlagen, dass die insbesondere als Weitwinkelkamera ausgebildete Außenkamera einen größeren Bereich aufnimmt und nur ein durch einen Benutzer und/oder automatisch einstellbarer Bildausschnitt eines durch die Außenkamera aufgenommenen Bildes auf der Anzeigevorrichtung dargestellt wird. Dort wird also ein Bildausschnitt des Kamerabildes angezeigt, der durch den Benutzer oder situationsabhängig ausgewählt werden kann.

Sowohl eine Verschwenkung der Kamera als auch eine Auswahl eines Bildausschnitts können also einen Fahrer die Möglichkeit geben, den im Spiegel dargestellten Blickwinkel zu verändern, sei es durch die mechanische Verschwenkung der Kamera oder durch die Auswahl eines bestimmten Bildausschnitts. Auch eine automatische Verstellung des Blickwinkels wurde bereits vorgeschlagen, wobei eine automatische Änderung in manchen Situationen eher unerwünscht sein kann. In diesen Situationen ist eine Fahrer-Interaktion nötig.

Während eine Spiegelfläche eines herkömmlichen Rückspiegels eine feste Einheit ohne viele Freiheitsgrade zu deren Einstellung darstellt, existieren diese mithin bei einer Anzeigevorrichtung durchaus, nicht nur bezüglich des Bildausschnitts bzw. der Verschwenkung der Kamera, sondern auch bezüglich anderer Darstellungsparameter. Nachdem sich mit elektronischen Rückspiegeln auch Fahrerassistenzsysteme kombinieren lassen, die dann beispielsweise Einblendungen vornehmen, wird die Zahl der Einstellungsmöglichkeiten, auf die ein Fahrer gegebenenfalls Einfluss nehmen möchte, noch erhöht.

EP 1 930 203 A1 offenbart ein Kraftfahrzeug nach dem Oberbegriff von Anspruch 1, und betrifft eine Parkassistenzvorrichtung, die es erlauben soll, ein Fahrzeug so zu platzieren, dass auch eine Leistungsübertragung mit einem fest installierten Gerät möglich ist. Die Parkassistenzvorrichtung weist eine rückwärtsgerichtete Kamera auf, deren Bilder auf einem Touchdisplay dargestellt werden können, welches auch zur Bedienung der Parkassistenzvorrichtung genutzt wird.

US 2002/0186201 A1 betrifft die Nachverfolgung von Fahrzeugen und die Identifizierung von Notfall-/Rechtsdurchsetzungsfahrzeugen. Dabei ist wenigstens eine Kamera vorgesehen, deren Videobilder auf einem Display innerhalb des Kraftfahrzeugs dargestellt werden, wobei das Display ein Touchscreen sein kann, über welchen Bildbereiche zur näheren Analyse angewählt werden können oder die Einstellung der Kamera betreffende Motoren angesteuert werden können.

US 5,680,123 betrifft ein Fahrzeugüberwachungssystem, welches eine Mehrzahl von Videokameras zur Aufzeichnung und Darstellung von nicht direkt sichtbaren Objekten aufweist. Das Display kann dabei ein Touchscreen sein, auf dem ein Menü dargestellt werden kann, um unterschiedliche Ansichtsmoden einer Kamera auszuwählen.

DE 10 2009 008 041 A1 betrifft ein Verfahren zum Betrieb eines Kraftfahrzeugs mit einem Touchscreen, wobei zusätzlich ein Gestenerkennungsmodul vorgesehen ist, um den Touchscreen auch ohne dessen Berührung benutzen zu können.

Der Erfindung liegt daher die Aufgabe zugrunde, eine konkrete, vorteilhafte und für den Fahrer einfach verständliche Möglichkeit zur Bedienung eines elektronischen Rückspiegels und/oder damit in Beziehung stehender Fahrzeugsysteme anzugeben.

Zur Lösung dieser Aufgabe sind bei einem Kraftfahrzeug der eingangs genannten Art erfindungsgemäß die Merkmale des Anspruchs 1 vorgesehen.

Die Erfindung schlägt also vor, in einem derartigen Kamera-Monitor-System, also einem elektronischen Rückspiegel, ein insbesondere multitouchfähiges berührungssensitives Display einzusetzen. Dies ermöglicht eine Vielzahl von Interaktionsmöglichkeiten für den Fahrer, die besonders intuitiv erlernbar und verständlich sind, worauf im Folgenden noch näher eingegangen werden wird.

Touchscreens, wie sie im Rahmen der vorliegenden Erfindung verwendet werden, sind im Stand der Technik bereits weitgehend bekannt. Diese weisen der Darstellungsfläche zugeordnet eine ortsauflösende Sensorik auf, die eine Berührung der Darstellungsfläche, insbesondere wenigstens eine Berührung durch einen Finger, ortsgenau detektieren kann. So wird es ermöglicht, mit auf dem Touchscreen dargestellten Inhalten zu interagieren.

Besonders bevorzugt wird dabei ein multitouchfähiges Display verwendet, das bedeutet, die Sensorik ist dazu ausgebildet, an verschiedenen Orten gleichzeitig stattfindende Berührungen, insbesondere durch einen Finger, zu detektieren, so dass nicht nur durch einen Finger durchzuführende Gesten und Berührungen nachverfolgt werden können, sondern auch komplexere, zwei oder mehr Finger benötigende Bedienhandlungen durchgeführt werden können.

Insbesondere ist also eine dem Touchscreen zugeordnete Steuereinrichtung dazu ausgebildet, auch Bewegungen und/oder Gesten, die auf der berührungssensitiven Darstellungsfläche durch die Sensorik aufgenommen werden, zu ermitteln und korrekt auszuwerten.

In konkreter Ausgestaltung der vorliegenden Erfindung ist vorgesehen, dass eine Steuereinrichtung zur Steuerung des elektronischen Rückspiegels und/oder wenigstens eines weiteren Fahrzeugsystems in Abhängigkeit einer über den Touchscreen erfolgten Eingabe vorgesehen ist. Die in dem Touchscreen sensierten und insbesondere vorausgewerteten Eingaben werden mithin ausgewertet, um hieraus Steuerparameter und/oder Steuerbefehle zur Steuerung des elektronischen Außenspiegels und/oder wenigstens eines weiteren Fahrzeugsystems zu erzeugen, so dass mithin über den Touchscreen eine intuitive Einstellung möglicher Parameter erfolgen kann.

In einer vorteilhaften Ausgestaltung der vorliegenden Erfindung kann vorgesehen sein, dass wenigstens ein Darstellungsparameter der Anzeigevorrichtung, insbesondere die Helligkeit und/oder der Kontrast und/oder ein Farbparameter, über den Touchscreen einstellbar ist. Es ist also beispielsweise denkbar, dass bezüglich dem optischen Eindruck des auf dem Display dargestellten Bildes Darstellungsparameter direkt über den Touchscreen an der Anzeigevorrichtung einstellbar sind. Der Fahrer kann das Bild heller oder dunkler stellen, den Kontrast wählen und auch weitere gängige Parameter, insbesondere farbbezogene Parameter, einstellen. Dabei kann in zweckmäßiger Ausgestaltung der vorliegenden Erfindung vorgesehen sein, dass die Steuereinrichtung zur Einblendung eines Schiebereglers für den Darstellungsparameter auf der Anzeigevorrichtung ausgebildet ist. Nach Anwahl einer bestimmten Einstellungsmöglichkeit, was über ein Menü, eine bestimmte Geste und/oder ein dargestelltes Bedienelement erfolgen kann, wird auf der Darstellungsfläche des Touchscreens mithin ein Schieberegler eingeblendet, der beispielsweise durch Berührung an der Stelle des Schiebereglers ergriffen und manipuliert werden kann, um den Darstellungsparameter einzustellen. Selbstverständlich sind auch andere Möglichkeiten denkbar, den Darstellungsparameter einstellbar zu machen, beispielsweise mit "+" und/oder "-" bezeichnete, auf der Darstellungsfläche eingeblendete Bedienelemente, die entsprechend eine Erhöhung bzw. Erniedrigung des Darstellungsparameters auslösen, wenn dort eine Berührung sensiert wird.

In weiterer Ausgestaltung der vorliegenden Erfindung kann vorgesehen sein, dass wenigstens ein Betriebsparameter wenigstens eines die Anzeigevorrichtung zur Ausgabe einer Information und/oder Warnung nutzenden Fahrzeugsystems, insbesondere Fahrerassistenzsystems, in Abhängigkeit einer Eingabe auf dem Touchscreen einstellbar ist. Nutzt also ein weiteres Fahrzeugsystem die Anzeigevorrichtung mit, beispielsweise um eine Warnung und/oder einen Hinweis auszugeben, ist es auf eine besonders intuitive Art und Weise möglich, an einem Ort, den der Fahrer ohnehin mit der Funktion des Fahrzeugsystems assoziiert, nämlich der Anzeigevorrichtung, unmittelbar auch eine Einstellung von Betriebsparametern des Fahrzeugsystems über den Touchscreen zu ermöglichen. Konkret kann dabei als Fahrerassistenzsystem ein Spurwechselassistenzsystem und/oder ein Totwinkelassistenzsystem und/oder eine Einparkhilfe und/oder ein Rückwärtsfahrtassistenzsystem vorgesehen sein. Derartige Systeme bieten Assistenzfunktionen an, die ohnehin in näherem Zusammenhang zum Rückraum des Kraftfahrzeugs bzw. dem elektronischen Rückspiegel stehen.

In zweckmäßiger Weiterbildung der Erfindung kann wenigstens eine in das Bild eingeblendete, auf der Anzeigevorrichtung dargestellte Zusatzinformation durch Interaktion am Darstellungsort der Zusatzinformation in der Darstellung konfigurierbar sein, insbesondere verschiebbar sein. Wird mithin eine Zusatzinformation, beispielsweise eine Warnung und/oder ein Hinweis eines Fahrerassistenzsystems, angezeigt, kann eine direkte Interaktion mit der dargestellten Zusatzinformation erfolgen, beispielsweise, indem diese an einen anderen Darstellungsort verschoben werden kann oder sich kontextsensitiv bei Berührung ein der Zusatzinformation und/oder dem Fahrerassistenzsystem zugeordnetes Menü zur Einstellung weiterer Darstellungsparameter und/oder Betriebsparameter des Fahrerassistenzsystems öffnen. Eine derartige Zusatzinformation kann beispielsweise eine Abstandsmessung zu einem hinter dem Kraftfahrzeug befindlichen Objekt bei einer Rückwärtsfahrt oder dergleichen betreffen.

Wie bereits erwähnt wurde, kann zweckmäßigerweise vorgesehen sein, dass die Steuereinrichtung zur Darstellung wenigstens eines insbesondere kontextsensitiven, durch den Touchscreen bedienbaren Menüs auf der Anzeigevorrichtung ausgebildet ist. Insbesondere also abhängig davon, wo das Menü durch eine Berührung und/oder Geste aufgerufen wurde, kann ein Menü dargestellt werden, das die Einstellung von Parametern ermöglicht, in deren Abhängigkeit dann die Ansteuerung des elektronischen Rückspiegels und/oder des wenigstens einen weiteren Fahrzeugsystems erfolgen kann.

In einem Fall, in dem zwei elektronische Außen- und/oder Seitenspiegel an gegenüberliegenden Seiten des Kraftfahrzeugs vorgesehen sind, ist es wahrscheinlich, dass nur eine Anzeigevorrichtung eines elektronischen Außen- und/oder Seitenspiegels durch den Fahrer tatsächlich erreichbar ist, insbesondere bei Rechtsverkehr nur die linke. Mithin ist es vorgesehen, dass bei einem Außen- und/oder Seitenspiegel als elektronischer Rückspiegel nur an einem Außen- und/oder Seitenspiegel ein Touchscreen vorgesehen ist, von dem aus wenigstens ein Parameter eines gegenüberliegenden Außenund/oder Seitenspiegels einstellbar ist. Mithin kann beispielsweise bei Rechtsverkehr über den Touchscreen eines linken Außen- und/oder Seitenspiegels beispielsweise ein Parameter für den rechten Außen- und/oder Seitenspiegel eingestellt werden, wofür beispielsweise ein Bedienelement gegeben sein kann, das den anderen Außen- und/oder Seitenspiegel zur Konfiguration desselben und/oder eines diesem zugeordneten Fahrzeugsystems anwählt. Dabei kann beispielsweise vorgesehen sein, dass dann die Darstellung des anderen Außen- und/oder Seitenspiegels zumindest temporär übernommen wird.

Besonders vorteilhaft ist es ferner, wenn die Anzeigevorrichtung in einem Innenraum des Kraftfahrzeugs angeordnet ist. Zwar ist es grundsätzlich auch denkbar, an Außenspiegeln vorgesehene Anzeigevorrichtungen als Touchscreen auszubilden, jedoch ist bei im Inneren eines Kraftfahrzeugs angeordneten Anzeigevorrichtungen, beispielsweise bei zentralen elektronischen Rückspiegeln und/oder elektronischen Seitenspiegeln, eine bessere Erreichbarkeit und mithin eine bessere Gesamthandhabbarkeit gegeben.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipskizze eines erfindungsgemäßen Kraftfahrzeugs,
- Fig. 2: eine erste mögliche Darstellung auf dem Touchscreen,
- Fig. 3: eine zweite mögliche Darstellung auf dem Touchscreen,
- Fig. 4: eine dritte mögliche Darstellung auf dem Touchscreen, und
- Fig. 5: eine Skizze zur Verschiebung von Zusatzinformationen.

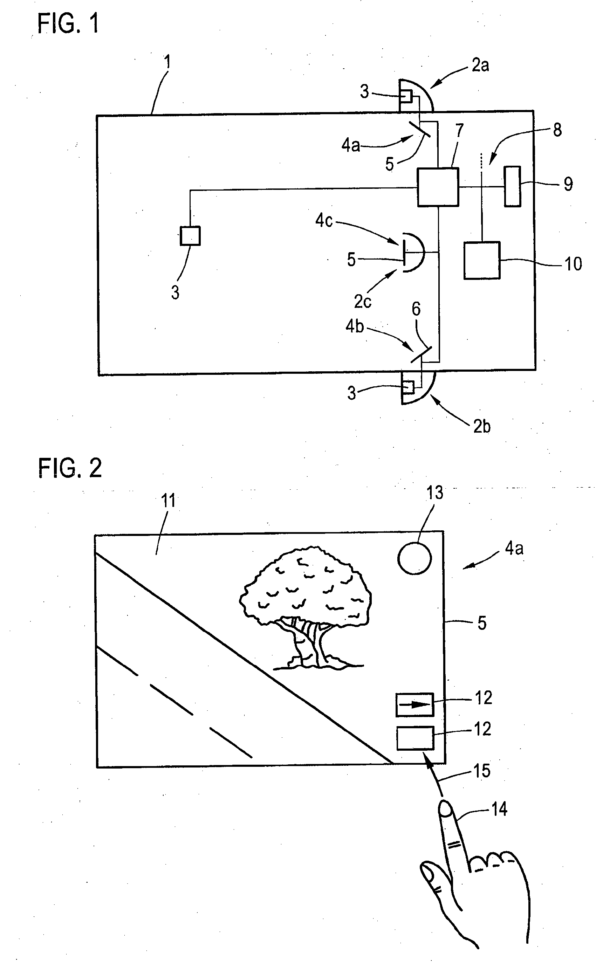

Fig. 1 zeigt eine Prinzipskizze eines Ausführungsbeispiels eines erfindungsgemäßen Kraftfahrzeugs 1. Das Kraftfahrzeug 1 weist drei elektronische Rückspiegel 2a, 2b und 2c auf. Bei den elektronischen Rückspiegeln 2a und 2b handelt es sich um Seitenspiegel. Der elektronische Rückspiegel 2c ist ein zentraler Rückspiegel des Kraftfahrzeugs 1. Jedem der elektronischen Rückspiegel 2a, 2b und 2c ist eine die äußere Umgebung des Kraftfahrzeugs 1 aufnehmende Außenkamera 3 zugeordnet, die rückwärtig orientiert ist. Die Bilder bzw. Bildausschnitte von den Bildern der Kamera können jeweils auf eine Anzeigevorrichtung 4a, 4b bzw. 4c zur Anzeige gebracht werden, wobei die Anzeigevorrichtungen 4a, 4b und 4c allesamt als Display ausgestaltet sind.

Dabei handelt es sich bei den Anzeigevorrichtungen 4a und 4c jeweils um einen Touchscreen 5, der auch multitouchfähig ist, dessen Sensorik mithin auch mehrere gleichzeitige Berührungen auflösen kann. Bei der Anzeigevorrichtung 4b handelt es sich um ein übliches Display 6.

Der Betrieb der elektronischen Rückspiegel 2a, 2b und 2c wird vorliegend zentral durch eine Steuereinrichtung 7 gesteuert, wobei jedoch auch in einem anderen Ausführungsbeispiel jedem der elektronischen Außenspiegel 2a, 2b, 2c eigene Steuereinrichtungen zugeordnet sein können.

Über ein Bussystem 8, hier einen CAN-Bus, steht die Steuereinrichtung 7 auch in Kontakt mit weiteren Fahrzeugsystemen, von denen hier eine Einparkhilfe 9 und ein Spurwechselassistent 10 als Fahrerassistenzsysteme gezeigt sind, die die Anzeigevorrichtung 4a, 4b und 4c nutzen, um Warnungen und/oder Hinweise als Zusatzinformationen auszugeben, worauf im Folgenden noch näher eingegangen wird.

Die Touchscreens 5 können genutzt werden, um Einstellungen der elektronischen Außenspiegel 2a, 2b und 2c vorzunehmen, aber auch, um die die Anzeigevorrichtungen 4a, 4b, 4c mitnutzenden Fahrzeugsysteme zu konfigurieren, hier beispielsweise die Einparkhilfe 9 und den Spurwechselassistenten 10. Dabei ist der elektronische Rückspiegel 2c über seinen eigenen Touchscreen 5 konfigurierbar, die Seitenspiegel, elektronische Rückspiegel 2a und 2b, sind beide über den Touchscreen 5 des linken elektronischen Rückspiegels 2a, wobei von Rechtsverkehr ausgegangen wird, konfigurierbar. Nachdem sich die Anzeigevorrichtung 4a im Inneren des Kraftfahrzeugs 1 befindet, ist auch eine gute Erreichbarkeit des Touchscreens 5 gegeben.

Die Figuren 2 bis 4 zeigen bei dem Touchscreen 5 des linken Seitenspiegels realisierte Bedienmöglichkeiten beispielhaft auf. Wie aus Fig. 2 ersichtlich ist, ist neben dem Bild 11 auf der Anzeigevorrichtung 4a, mithin dem Touchscreen 5, die Einblendung von Symbolen 12 gegeben, die auf Bedienmöglichkeiten hinweisen. Zudem wird durch das Spurwechselassistenzsystem 10 eine Zusatzinformation 13, hier ein Hinweis bzw. eine Warnung, ob ein Spurwechsel gefahrlos möglich ist, eingeblendet. Berührt der Fahrer mit einem Finger 14 nun eines der Symbole 12 oder die Zusatzinformation 13, öffnen sich kontextsensitiv Menüs oder Einstellmöglichkeiten. Während das obere Symbol 12 ein Umschalten auf eine Einstellbarkeit des rechten Seitenspiegels, elektronischer Rückspiegel 2b, bietet, soll nun vorliegend der Fall näher betrachtet werden, dass das Symbol 12 auf dem Touchscreen 5 durch den Finger 14 angetippt wird, vgl. Pfeil 15.

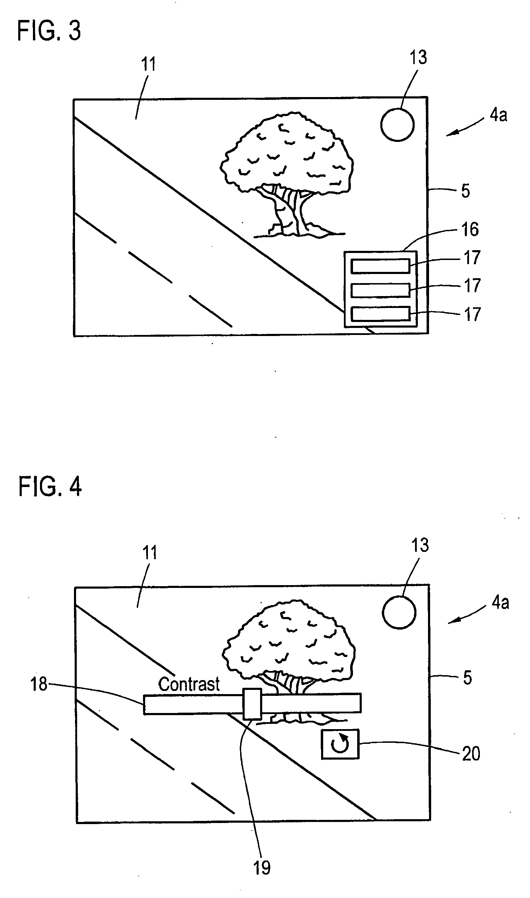

Gemäß Fig. 3 werden dann die Symbole 12 durch ein Menü 16 ersetzt, welches hier mehrere auf Darstellungsparameter bezogene Menüeinträge 17, insbesondere für Kontrast, Helligkeit und einen Farbparameter, aufweist. Wird nun beispielsweise mit dem Finger 14 der dem Kontrast zugeordnete Menüeintrag 17 angewählt, ergibt sich die Darstellung der Fig. 4, worin ein Schieberegler 18 mit dem Wort "Contrast" darüber angezeigt wird. Mit dem Finger 14 kann der Fahrer nun den auf dem Touchscreen 5 dargestellten Schieber 19 anwählen und durch links-rechts-Bewegung seines Fingers auf dem Touchscreen 5 diesen bewegen und somit den Kontrast verstellen. Über ein Bedienelement 20 kann er auch zu dem Menü 16 zurückkehren.

Dabei sei an dieser Stelle darauf hingewiesen, dass immer dann, wenn keine weitere Bedienaktion erfolgt, also insbesondere keine weitere Berührung des Touchscreens 5 sensiert wird, nach einer vorbestimmten Zeitdauer wieder zur Standarddarstellung in Fig. 2 zurückgekehrt wird.

In einigen Ausführungsbeispielen ist es auch denkbar, dass durch ein Antippen des Touchscreens 5 außerhalb dargestellter Bedienelemente/Menüeinträge eine Rückkehr zur Standarddarstellung in Fig. 2 möglich ist.

Bei Berühren der Zusatzinformation 13 ergibt sich ein entsprechendes Menü, welches Einstellungen bezüglich des Spurwechselassistenten 10, also insbesondere von Betriebsparametern des Spurwechselassistenten 10, ermöglicht.

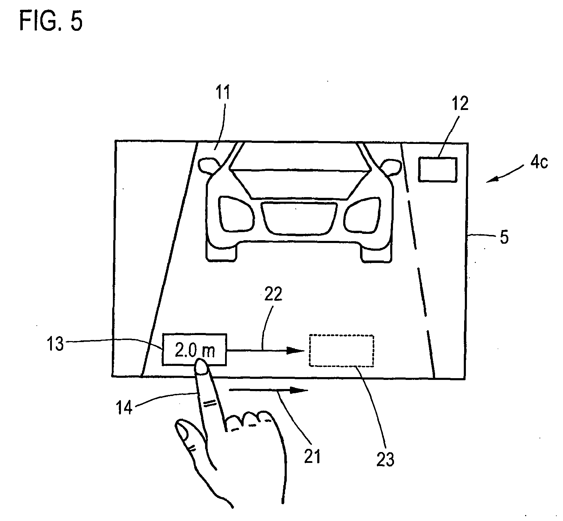

Fig. 5 zeigt nun eine mögliche Darstellung auf der Anzeigevorrichtung 4c des zentralen elektronischen Rückspiegels 2c, in der wiederum zusätzlich zu dem Bild 11 eine Zusatzinformation 13 und ein Symbol 12 dargestellt sind. Das Symbol 12 ermöglicht auch hier die Einstellung von Darstellungsparametern, wie bereits bezüglich der Figuren 2 bis 4 beschrieben. Als Zusatzinformation 13 wird ein Abstand zu einem hinter dem Kraftfahrzeug befindlichen Objekt, hier dem darstellten weiteren Kraftfahrzeug, eingeblendet ("park distance"). Diese Zusatzinformation 13 kann mit dem Finger 14 nun angewählt werden. Wird dann der Finger 14 verschoben, Pfeil 21, wird auch die Zusatzinformation 13 gemäß des Pfeils 22 an eine neue Position 23 versetzt. Es sei darauf hingewiesen, dass selbstverständlich auch hier ein kontextsensitives Menü für die Zusatzinformation 13 realisiert werden kann, beispielsweise, indem diese doppelt innerhalb einer vorbestimmten Zeit angetippt wird.

Auch komplexere Gesten lassen sich im Rahmen der vorliegenden Erfindung durchführen und zur Bedienung nutzen.

## Patentansprüche

1. Kraftfahrzeug (1), umfassend wenigstens einen elektronischen Rückspiegel (2a, 2b, 2c), insbesondere einen Außen- und/oder Seitenspiegel, der eine Anzeigevorrichtung (4a, 4b, 4c), insbesondere ein Display (5, 6), für von einer insbesondere außerhalb des Kraftfahrzeugs (1) vorgesehenen Außenkamera (3) aufgenommene Bilder (11) aufweist, wobei die Anzeigevorrichtung (4a, 4b, 4c) als ein insbesondere multitouchfähiger Touchscreen (5) ausgebildet ist und wobei eine Steuereinrichtung (7) zur Steuerung des elektronischen Rückspiegels (2a, 2b, 2c) und/oder wenigstens eines weiteren Fahrzeugsystems in Abhängigkeit einer über den Touchscreen (5) erfolgten Eingabe vorgesehen ist,
**dadurch gekennzeichnet,**
**dass** bei einem Außen- und/oder Seitenspiegel als elektronischer Rückspiegel (2a, 2b, 2c) nur an einem Außen- und/oder Seitenspiegel ein Touchscreen (5) vorgesehen ist, von dem aus wenigstens ein Parameter eines gegenüberliegenden elektronischen Rückspiegels (2a, 2b, 2c) einstellbar ist.

2. Kraftfahrzeug nach Anspruch 1, **dadurch gekennzeichnet, dass** wenigstens ein Darstellungsparameter der Anzeigevorrichtung (4a, 4b, 4c), insbesondere die Helligkeit und/oder der Kontrast und/oder ein Farbparameter, über den Touchscreen (5) einstellbar ist.

3. Kraftfahrzeug nach Anspruch 2, **dadurch gekennzeichnet, dass** die Steuereinrichtung (7) zur Einblendung eines Schiebereglers (18) für den Darstellungsparameter auf der Anzeigevorrichtung (4a, 4b, 4c) ausgebildet ist.

4. Kraftfahrzeug nach einem der vorangehenden Ansprüche, **dadurch gekennzeichnet, dass** wenigstens ein Betriebsparameter wenigstens eines die Anzeigevorrichtung (4a, 4b, 4c) zur Ausgabe einer Information und/oder Warnung nutzendes Fahrzeugsystem, insbesondere Fahrerassistenzsystem, in Abhängigkeit einer Eingabe auf dem Touchscreen (5) einstellbar ist.

5. Kraftfahrzeug nach Anspruch 4, **dadurch gekennzeichnet, dass** als Fahrerassistenzsystem ein Spurwechselassistenzsystem (10) und/oder ein Totwinkelassistenzsystem und/oder eine Einparkhilfe (9) und/oder ein Rückwärtsfahrtassistenzsystem vorgesehen ist.

6. Kraftfahrzeug nach einem der vorangehenden Ansprüche, **dadurch gekennzeichnet, dass** wenigstens eine in das Bild (11) eingeblendete, auf der Anzeigevorrichtung (4a, 4b, 4c) dargestellte Zusatzinformation (13) durch Interaktion am Darstellungsort der Zusatzinformation (13) in der Darstellung konfigurierbar ist, insbesondere verschiebbar ist.

7. Kraftfahrzeug nach einem der vorangehenden Ansprüche, **dadurch gekennzeichnet, dass** die Steuereinrichtung (7) zur Darstellung wenigstens eines insbesondere kontextsensitiven, durch den Touchscreen (5) bedienbaren Menüs (16) auf der Anzeigevorrichtung (4a, 4b, 4c) ausgebildet ist.

8. Kraftfahrzeug nach einem der vorangehenden Ansprüche, **dadurch gekennzeichnet, dass** die Anzeigevorrichtung (4a, 4b, 4c) in einem Innenraum des Kraftfahrzeugs (1) angeordnet ist.

## Claims

1. Motor vehicle (1), comprising at least one electronic rearview mirror (2a, 2b, 2c), in particular an exterior and/or side mirror, which comprises a display device (4a, 4b, 4c), in particular a display (5, 6), for images (11) captured by an external camera (3) provided in particular outside the motor vehicle (1), wherein the display device (4a, 4b, 4c) is designed in particular as a multi-touch touchscreen (5) and wherein a control device (7) is provided for controlling the electronic rearview mirror (2a, 2b, 2c) and/or at least one additional motor vehicle system as a function of an entry made via the touchscreen (5), **characterised in that** with an exterior and/or side mirror as an electronic rearview mirror (2a, 2b, 2c) a touchscreen (5) is provided only on an exterior and/or side mirror, by means of which at least one parameter of an opposite electronic rearview mirror (2a, 2b, 2c) can be adjusted.

2. Motor vehicle according to claim 1, **characterised in that** at least one display parameter of the display device (4a, 4b, 4c), in particular the brightness and/or the contrast and/or a colour parameter, can be adjusted via the touchscreen (5).

3. Motor vehicle according to claim 2, **characterised in that** the control device (7) is designed for superimposing a slide control (18) for the display parameter on the display device (4a, 4b, 4c).

4. Motor vehicle according to any one of the preceding claims, **characterised in that** at least one operating parameter of at least one vehicle system, in particular a driver assist system, using the display device (4a, 4b, 4c) for transmitting information and/or a warning, can be adjusted as a function of an entry on the touchscreen (5).

5. Motor vehicle according to claim 4, **characterised in that** as a driver assist system a lane changing assist system (10) and/or a blind spot assist system and/or a parking assist (9) and/or a reversing assist system is provided.

6. Motor vehicle according to any one of the preceding claims, **characterised in that** at least one piece of additional information (13) which is superimposed onto the image (11) and represented on the display device (4a, 4b, 4c) can be configured, in particular displaced, by interaction at the site of the additional information (13) in the display.

7. Motor vehicle according to any one of the preceding claims, **characterised in that** the control device (7) is designed for displaying at least one in particular context-sensitive menu (16) operable via the touchscreen (5) on the display device (4a, 4b, 4c).

8. Motor vehicle according to any one of the preceding claims, **characterised in that** the display device (4a, 4b, 4c) is arranged in an inner chamber of the motor vehicle (1).

## Revendications

1. Véhicule automobile (1) comprenant au moins un rétroviseur électronique (2a, 2b, 2c), en particulier une glace externe et/ou latérale, qui présente un dispositif d'affichage (4a, 4b, 4c), en particulier un affichage (5, 6) pour des images (11) prises par une caméra externe (3) aménagée en particulier à l'extérieur du véhicule automobile (1), dans lequel le dispositif d'affichage (4a, 4b, 4c) est conformé en écran tactile (5) en particulier multitouche et dans lequel il est prévu un dispositif de commande (7) pour commander le rétroviseur électronique (2a, 2b, 2c) et/ou un autre système du véhicule en fonction d'une entrée effectuée via l'écran tactile (5),
**caractérisé en ce que**,
dans une glace externe et/ou latérale utilisée comme rétroviseur électronique (2a, 2b, 2c), il n'est prévu sur une glace externe et/ou latérale qu'un écran tactile (5) par lequel on peut régler au moins un paramètre d'un rétroviseur électronique opposé (2a, 2b, 2c).

2. Véhicule automobile selon la revendication 1, **caractérisé en ce qu'**au moins un paramètre de représentation du dispositif d'affichage (4a, 4b, 4c) peut être réglé via l'écran tactile (5), en particulier la luminosité et/ou le contraste et/ou un paramètre de couleur.

3. Véhicule automobile selon la revendication 2, **caractérisé en ce que** le dispositif de commande (7) est conçu pour superposer un régulateur à coulisse (18) pour le paramètre de représentation sur le dispositif d'affichage (4a, 4b, 4c).

4. Véhicule automobile selon l'une quelconque des revendications précédentes, **caractérisé en ce qu'**au moins un paramètre de fonctionnement d'au moins un système du véhicule utilisant le dispositif d'affichage (4a, 4b, 4c) pour délivrer des informations et/ou un avertissement, en particulier un système d'assistance au chauffeur, peut être réglé en fonction d'une entrée sur l'écran tactile (5).

5. Véhicule automobile selon la revendication 4, **caractérisé en ce qu'**il est prévu comme système d'assistance au chauffeur un système d'assistance à la modification du parallélisme (10) et/ou un système d'assistance à l'angle mort et/ou une aide au stationnement (9) et/ou un système d'assistance au recul.

6. Véhicule automobile selon l'une quelconque des revendications précédentes, **caractérisé en ce qu'**au moins une information supplémentaire (13) superposée à l'image (11) et représentée sur le dispositif d'affichage (4a, 4b, 4c) peut être configurée, en particulier déplacée dans la représentation par interaction au point de représentation de l'information supplémentaire (13) .

7. Véhicule automobile selon l'une quelconque des revendications précédentes, **caractérisé en ce que** le dispositif de commande (7) est conçu pour représenter au moins un menu (16) en particulier sensible au contexte et qui peut être desservi par l'écran tactile (5) sur le dispositif d'affichage (4a, 4b, 4c).

8. Véhicule automobile selon l'une quelconque des revendications précédentes, **caractérisé en ce que** le dispositif d'affichage (4a, 4b, 4c) est aménagé dans un espace interne du véhicule automobile (1).
